(19) Europäisches Patentamt / European Patent Office / Office européen des brevets

(11) **EP 1 923 670 B1**

(12) **EUROPÄISCHE PATENTSCHRIFT**

(45) Veröffentlichungstag und Bekanntmachung des Hinweises auf die Patenterteilung:
**17.03.2010   Patentblatt 2010/11**

(51) Int Cl.:
***G01D 5/244*** *(2006.01)*

(21) Anmeldenummer: 06450170.3

(22) Anmeldetag: **17.11.2006**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**21.05.2008   Patentblatt 2008/21**

(73) Patentinhaber: **AMO Automatisierung Messtechnik Optik GmbH**
**4963 St. Peter am Hart (AT)**

(72) Erfinder: **Vasiloiu, Victor**
**5280 Braunau am Inn (AT)**

(74) Vertreter: **Patentanwälte**
**Barger, Piso & Partner**
**Mahlerstrasse 9**
**Postfach 96**
**1015 Wien (AT)**

(56) Entgegenhaltungen:
**EP-A1- 0 395 936     EP-B1- 0 302 194**
**DE-A1- 1 811 961     DE-C2- 19 920 596**

EP 1 923 670 B1

**Beschreibung**

Die Erfindung bezieht sich auf eine Positionsmesseinrichtung zur Erfassung der relativen Lage zweier gegeneinander bewegbarer Körper, umfassend eine mit einem der Körper verbundene Maßverkörperung, die eine Teilung aufweist, und einen mit dem anderen Körper verbundenen Abtastkopf zum Ablesen der Teilung, wobei der Abtastkopf mit einer Auswerteelektronik verbunden ist.

Aus dem Stand der Technik sind Messgeräte mit multipler Abtastung für die genaue Winkelerfassung bekannt. Ein solches Winkelmessgerät besteht grundsätzlich aus einer Maßverkörperung als scheibenförmigen Träger mit einer Messteilung - und einer oder mehreren Abtasteinheiten. Bei der relativen Bewegung zwischen den zwei Elementen erfasst die Abtasteinheit in absoluter oder inkrementeller Form die Winkellage der Maßverkörperung. Die Genauigkeit der Winkelerfassung ist für solche Geräte von großer Bedeutung und ist im Wesentlichen von folgenden Systemeigenschaften beeinflusst:

- Exzentrizität der gesamten Messteilung zur Drehachse
- Formabweichungen des Teilungsträgers von der idealen zylindrischen Form
- Teilungsfehler als lokale, geometrische Abweichungen von der Idealform der Kodierung in Drehrichtung oder senkrecht zu dieser
- Rundlauffehler der Lagerung
- Aleatorische geometrische Abweichungen wie Lagerspiel oder Materialverformung unter Last
- Abweichungen verursacht durch die Auswerteelektronik in der Erfassung der Winkelposition

Ein allgemeines Prinzip der Abtastung einer periodischen Teilung ist, dass ein Abtastkopf mit einer Sensoreinheit nicht eine einzige Teilungsperiode (Teilstrich) abtastet sondern für die Signalgewinnung aber auch für die Unterdrückung der einzelnen Teilungsstrichfehler mehrere solche Perioden zur Signalmittelung gleichzeitig erfasst werden. Das bedeutet, dass für den abgetasteten Teilungsbereich durch die elektronische Mittelwertbildung der Signale die von den einzelnen Teilstrichen generiert werden, eine genauere Winkelinformation gewonnen wird. Dieses Prinzip extrapoliert, hieße, dass eine vollständige zirkulare Erfassung über den ganzen Umfang der Maßverkörperung ideale Ergebnisse liefern sollte. Eine solche Art der Abtastung unterdrückt, wie im folgenden erläutert, auch alle anderen oben erwähnten Fehlerursachen. Diese Systemausführung ist in der praktischen Umsetzung selten technisch realisierbar und aus dem Grund wurden im Laufe der Zeit unterschiedliche Ersatzlösungen entwickelt.

Diese Lösungen basieren meistens auf einer doppelten diametralen Abtastung, die von der Exzentrizität der Teilung hervorgerufenen Fehler zur Gänze unterdrückt und den Rest der anderen Abweichungen zu einem Mittelwert reduzieren. Eine genaue Erläuterung dieses Prinzips ist in der folgenden Beschreibung zu finden.

Ein wichtiger Aspekt bei der Summenbildung der einzelnen Signale der beiden Abtasteinheiten ist, dass diese, um keine Amplitudenverringerung zu verursachen, mit einer geringen zugelassenen Abweichung in Phase sein müssen (Phasendifferenz gegen "O"), da ansonsten im Extremfall bei einer Phasendifferenz von 180° (gegenphasig) das Gesamtsignal in Summe gegen "Null" reduziert wird.

Die DE 1 811 961 offenbart eine Winkelmesseinrichtung mit diametral angeordneten Abtasteinheiten, bei der für die Fehlerkompensation vier Abtasteinheiten verwendet werden. Um das Phasendifferenzproblem zu lösen, wird zur Hauptmessteilung der Maßverkörperung eine zusätzliche zweite Referenzrundteilung mit eigenen diametral angeordneten Abtasteinheiten herangezogen. Diese Lösung ist sehr komplex und aufwendig in der Umsetzung.

Die EP 0 302 194 B1 beschreibt eine Schaltung zur Überwachung der Phasendifferenz zwischen einzelnen Abtasteinheiten einer Winkelmesseinrichtung mit diametral angeordneten Erfassungssensoren und zur Unterdrückung eines möglichen Fehlverhaltens im Falle der Überschreitung der Phasendifferenz der einzelnen Abtasteinheiten, damit diese nicht zu einem irreversiblen Winkelwertverlust führt und die bereits vollständig erfassten Teilungsperioden bewahrt werden.

Die DE 19 920 596 C2 beschreibt eine komplexe, spezifische elektronische Schaltung für die Umwandlung aller einzelnen analogen Eingangssignale jeder diametral platzierten Abtasteinheit einer Winkelmesseinrichtung in digitale Werte und deren Kompensation für die Erfassung der Messinformation. Die EP-A-0 395 936 offenbart eine Positionsmesseinrichtung mit mehreren Abtaststellen und ist der vorliegenden Anmeldung am ähnlichsten.

Es ist die Aufgabe der vorliegenden Erfindung eine Positionsmesseinrichtung, beispielweise zur Erfassung von Winkeln oder linearen Abständen, mit einer Kompensation der systematischen Messfehler vorzustellen, mit der eine Genauigkeit ähnlich einer Mehrkopfabtastung erzielt, gleichzeitig aber der Aufwand für die Umsetzung, sowohl im Hinblick auf die Hardware, als auch die Software, deutlich reduziert werden kann und bei der die im Stand der Technik auftretende Problematik der Phasendifferenz zwischen den einzelnen Abtasteinheiten keinen Störeinflüssen unterliegt.

Diese Aufgabe wird mit einer Positionsmesseinrichtung der eingangs genannten Art dadurch gelöst, dass die Auswerteelektronik einen nichtflüchtigen Speicher aufweist, in dem Korrekturwerte für die vom Abtastkopf aufgenommenen Messwerte gespeichert sind, wobei die Korrekturwerte bei einer Kalibrierung der Positionsmesseinrichtung zusammen mit mindestens einem weiteren Abtastkopf ermittelt wurden.

Es kann somit im Betrieb eine hohe Genauigkeit bei der Erfassung der relativen Lage erzielt werden. Dazu reicht ein Abtastkopf aus, wodurch nicht nur weitere Abtastköpfe eingespart, sondern auch die erforderliche Rechenleistung während des Betriebs deutlich reduziert bleibt. Eine derartige Positionsmesseinrichtung kann sowohl als Winkel- als auch als Distanzmesseinrichtung ausgebildet sein. Der zusätzliche Abtastkopf, auch Kalibrierkopf genannt, ist dabei auf demselben Körper angeordnet, mit dem auch der als Messkopf bezeichnete Abtastkopf verbunden ist. Die relative Lage der Abtastköpfe bleibt daher während des Kalibriervorganges unverändert. Der zusätzliche Abtastkopf liest dieselbe Maßverkörperung ab wie der Messkopf nur an einer anderen Position.

Obige Aufgabe wird weiter gelöst durch ein Verfahren zur Erfassung der relativen Lage zweier gegeneinander bewegbarer Körper, bei dem eine mit einem der Körper verbundene Maßverkörperung mit einem mit dem anderen Körper verbundenen Abtastkopf abgelesen wird und welches dadurch gekennzeichnet ist, dass die vom Abtastkopf aufgenommenen Messwerte mit gespeicherten Korrekturwerten korrigiert werden, die zuvor bei einer Kalibrierung zusammen mit mindestens einem weiteren Abtastkopf ermittelt werden.

Die Korrekturwerte stehen nach der Kalibrierung ständig zur Verfügung. Da es sich bei derartigen Messsystemen im wesentlichen um reproduzierbare Fehler und Abweichungen handelt, stellen die zuvor ermittelten Korrekturwerte und deren Anwendung auf die Messwerte eine zuverlässige Vorgangsweise dar, um die Genauigkeit der korrigierten Messwerte zu gewährleisten.

Diese Aufgabe wird weiter gelöst durch ein Verfahren zur Kalibrierung einer Positionsmesseinrichtung zur Erfassung der relativen Lage zweier gegeneinander bewegbarer Körper, wobei die Positionsmesseinrichtung eine mit einem der Körper verbundene Maßverkörperung, die eine Teilung aufweist, und einen mit dem anderen Körper verbundenen Abtastkopf zum Ablesen der Teilung umfasst und der Abtastkopf mit einer Auswerteelektronik verbunden ist, wobei mindestens ein weiterer Abtastkopf zur Positionsmesseinrichtung hinzugefügt wird und mit den Abtastköpfen Messwerte ermittelt werden und aus den Abweichungen der von den einzelnen Abtastköpfen aufgenommenen Messwerte voneinander Korrekturwerte ermittelt werden, die in einem nichtflüchtigen Speicher der Auswerteelektronik gespeichert werden, und der weitere Abtastkopf danach von der Positionsmesseinrichtung wieder entfernt wird.

Der Erfindung liegt die Erkenntnis zu Grunde, dass für die hochgenauen Winkelmessanwendungen auch hochgenaue, spielfreie, vorgespannte und sehr steife Lagerungen eingesetzt werden müssen und dadurch die möglichen Messabweichungen überwiegend einen systematischen, reproduzierbaren Verlauf aufweisen und die aleatorischen Einflüsse nur mit vernachlässigbarer Größe auftreten können. Auch bei linearen Positionsmessungen, bei denen nicht ein Winkel, sondern ein Abstand interessiert, ist von systematischen und reproduzierbaren Fehlern auszugehen. Die Erfindung wird zunächst anhand einer Messeinrichtung für Winkel beschrieben, am Ende wird jedoch auch eine mögliche Realisierung für lineare Messsysteme vorgestellt.

Im folgenden wird die Erfindung anhand der Zeichnung näher erläutert. Dabei zeigt

Fig. 1 eine Positionsmesseinrichtung gemäß dem Stand der Technik mit vier ständig angebrachten Abtastköpfen,
Fig. 2a und Fig. 2b die Konfiguration einer erfindungsgemäßen Positionsmesseinrichtung während des Kalibriervorganges,
Fig. 2c eine erfindungsgemäße Positionsmesseinrichtung nach dem Kalibriervorgang,
Fig. 3a eine erfindungsgemäße Positionsmesseinrichtung mit Auswerteelektronik im Detail während des Kalibriervorganges,
Fig. 3b eine erfindungsgemäße Positionsmesseinrichtung mit Auswerteelektronik im Detail nach dem Kalibriervorgang,
Fig. 4a und Fig. 4b eine Darstellung der vom Messkopf und einem Kalibrierkopf aufgenommen bzw. umgewandelten Messdaten,
Fig. 5 ein Rundtisch einer Werkzeugmaschine mit einer Positionsmesseinrichtung, und
Fig. 6 eine Anwendung einer erfindungsgemäßen Positionsmesseinrichtung zur Erfassung linearer Abstände.

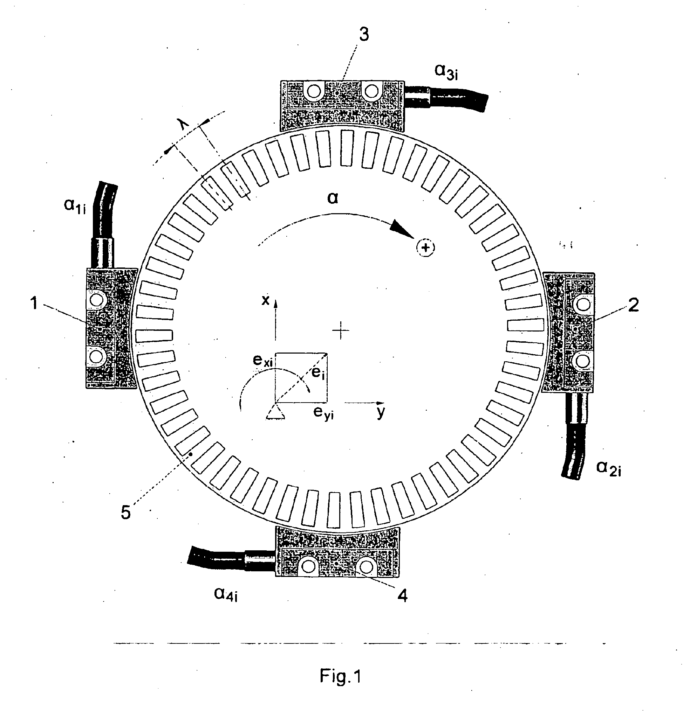

Fig. 1 zeigt eine Messscheibe 5 samt Maßverkörperung mit periodischer Teilung, wobei sich die Messscheibe mit einer Exzentrizität "e" vor vier diametral platzierten Abtastköpfen 1, 2, 3, 4 dreht. Die Teilung kann beispielsweise in Bereiche unterschiedlicher elektrischer, optischer, magnetischer Eigenschaften etc, erfolgen.

Die Abtastköpfe können grundsätzlich nur relative Bewegungen der Teilung in tangentialer Richtung erfassen und sind unempfindlich gegenüber Bewegungen senkrecht auf diese. So erfassen zum Beispiel die Abtastköpfe 1 und 2 (Fig. 1) mit unterschiedlichen Vorzeichen die Bewegungen in X-Richtung und sind unempfindlich gegenüber Lageänderungen der Messscheibe in γ-Richtung. Es wird angenommen, dass die Winkelinformation zusätzlich zu der Exzentrizität "e" auch von anderen systematischen Abweichungen wie Rundlauf der Achse, lokale Teilungsfehler, Formabweichungen usw. beeinträchtigt wird. Unter diesen Bedingungen kann man die Signalbildung für einen bestimmten Winkel folgendermaßen darstellen:

$$\alpha_{1i} = \alpha_i + \varepsilon_{1i} + e_{xi}$$

$$\alpha_{2i} = \alpha_i + \varepsilon_{2i} - e_{xi}$$

$$\alpha_{3i} = \alpha_i + \varepsilon_{3i} + e_{yi}$$

$$\alpha_{4i} = \alpha_i + \varepsilon_{4i} - e_{yi}$$

wobei $\alpha_i$ die tatsächlichen Winkel bzw. Winkeländerungen, also den Idealwert, $\alpha_{1i}$, $\alpha_{2i}$, $\alpha_{3i}$, $\alpha_{4i}$ die von den einzelnen Abtastköpfen 1, 2, 3, 4 aufgenommenen Messwerte,
e die durch die Exzentrizität verursachten Fehler und
$\varepsilon_{1i}$, $\varepsilon_{2i}$, $\varepsilon_{3i}$, $\varepsilon_{4i}$ die Summe der systematischen oder lokalen Abweichungen darstellen.

Für die Signalbildung als Mittelwert eines Paares diametraler Abtastköpfe ergibt sich:

$$\alpha_{io} = (\alpha_{1i} + \alpha_{2i})/2 = \alpha_i + (\varepsilon_{1i} + \varepsilon_{2i})/2$$

Dies bedeutet eine Eliminierung des Exzentrizitätsfehlers $e_{xi}$ und eine Verringerung der restlichen einzelnen systematischen Fehler durch deren Mittelung. In ähnlicher Weise ergibt sich für die Signalmittelung über zwei diametrale Abtastkopfpaare:

$$\alpha_{io} = (\alpha_{1i} + \alpha_{2i} + \alpha_{3i} + \alpha_{4i})/4 = \alpha_i + (\varepsilon_{1i} + \varepsilon_{2i} + \varepsilon_{3i} + \varepsilon_{4i})/4$$

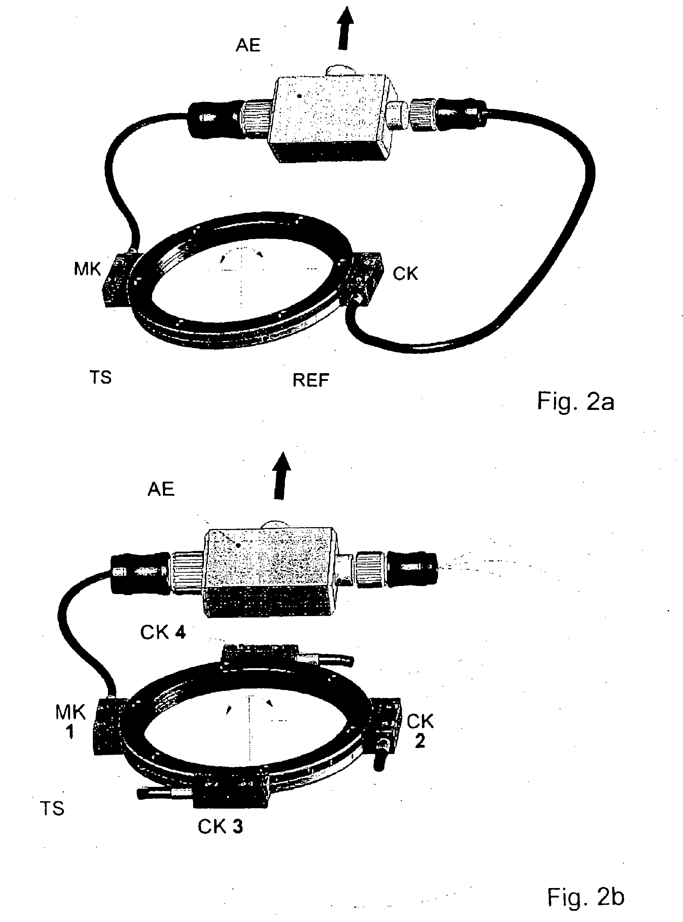

Dies bedeutet eine weitere Verringerung der systematischen Fehler im Winkelausgangswert.
Diese Fehler mit strikt systematischem, pro Teilungsumfang wiederholbarem Verhalten, können bei der Systemmontage der erfindungsgemäßen Winkelmesseinrichtung in einem einleitenden Verfahren erfasst und gespeichert werden, sodass das Gerät im Betrieb jede gemessene Winkelinformation mit einem Korrekturwert entsprechend dieser Fehler versieht, um diese Abweichungen zu eliminieren bzw. zu minimieren.
In einer Messanordnung wie in Fig. 2a, in der folgende Bezeichnungen verwendet werden:

M...Messkopf
CK...Kalibrierkopf
AE...Auswerteelektronik
TS...Maßverkörperung als Teilscheibe

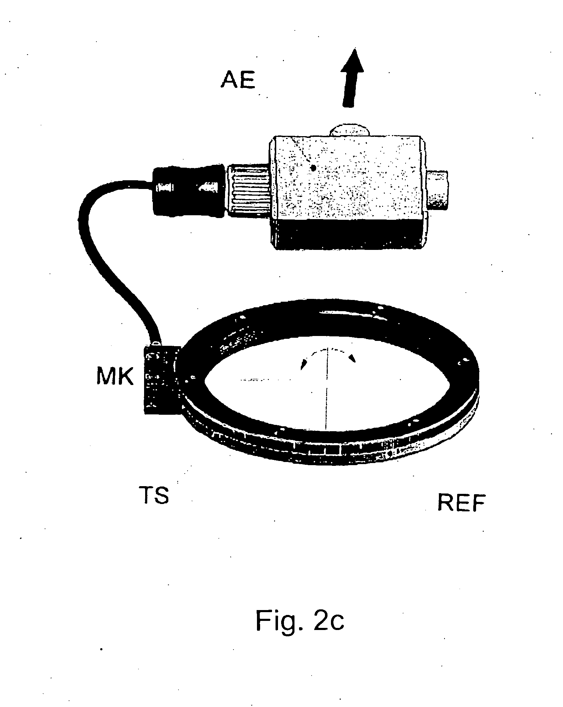

können in einem nach der Messsystemmontage durchzuführendem Kalibriervorgang die Messwerte für eine ganze Umdrehung der Maßverkörperung des Mess- und Kalibrierkopfes - wie im folgenden erläutert - herangezogen werden, sodass in der Auswerteelektronik Korrekturwerte in einem "Look up table" bzw. einer Kalibriertabelle für den ganzen Winkelbereich gespeichert werden.
Diese Korrektur beinhaltet alle systematischen Messabweichungen wie Exzentrizität als Montagerestfehler und die anderen lokalen Teilungsfehler.
Während des Kalibriervorganges wird ein zusätzlicher Abtastkopf im Bereich der Maßverkörperung angeordnet. Nachdem aus den Messwerten der Abtastköpfe Korrekturfaktoren berechnet und in einem nichtflüchtigen Speicher gespeichert wurden, wird der zusätzliche Abtastkopf, im weiteren auch Kalibrierkopf genannt wieder entfernt. Im normalen Betrieb ist also der Kalibrierkopf CK nicht mehr vorhanden, wie auch aus der Fig. 2c ersichtlich ist, und das Messsystem arbeitet nur mit dem Messkopf MK, liefert aber dennoch korrigierte Messwerte. Zu diesen gelangt man, indem man die im vorherigen Kalibriervorgang ermittelten Korrekturwerte auf die Messwerte des Messkopfes MK anwendet.

Für eine weitere Erhöhung der Genauigkeit kann darüber hinaus der Kalibrierkopf während des Kalibriervorganges sequenziell auch an zwei zusätzlichen Positionen um eine gegen die erste Messachse um 90° versetzte Lage angebracht werden, um eine 4-Kopf-Abtastung nachzubilden (Fig. 2b). In dieser Art werden für alle 4 Positionen die Abweichungen erfasst und zur Berechnung des in der Auswerteelektronik AE gespeicherten Korrekturwertes herangezogen.

Auch in dieser Anordnung wird im Betrieb nur der Messkopf MK alleine verwendet (Fig. 2c). Ein Vorteil einer solchen Messeinrichtung liegt auch darin, dass in einem Serieneinsatz alle Positionsmesseinrichtungen mit einem einzigen Kalibrierkopf geeicht werden können.

Diese Mess- und Kalibriermethode, die erfindungsgemäß in ihren Merkmalen in den folgenden Patentansprüchen gekennzeichnet wird, kann für alle möglichen physikalischen Funktionsprinzipien einer Winkel- bzw. Abstandsmesseinrichtung eingesetzt werden, die z.B. für eine optoelektronische, magnetische, induktive, kapazitive und ähnliche Messwerterfassung.

Es wird im folgenden eine bevorzugte, sichere und einfache Umsetzung dieser Messanordnung beschrieben, die aber selbstverständlich nicht die einzig Mögliche ist.

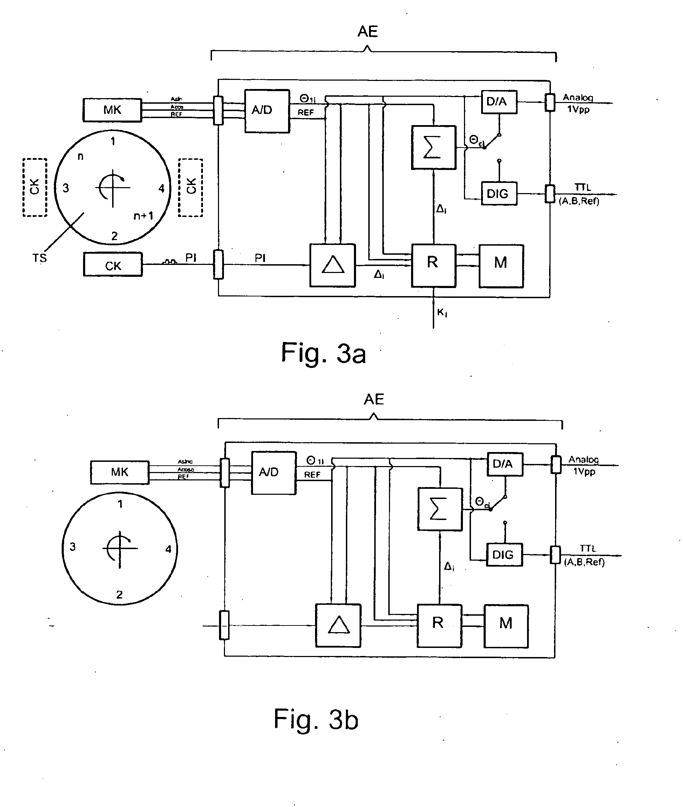

In den Fig. 3a und 3b sind die Blockdiagramme der Signalverarbeitung für eine erfindungsgemäße Positionsmesseinrichtung, wie sie in den Fig. 2a und 2b zu sehen ist, während des Kalibriervorganges und im normalen Betrieb im Detail dargestellt. Die Auswerteelektronik AE weist drei Eingänge auf, einen für den Messkopf MK, einen für den Kalibrierkopf CK und einen für die Konfigurationsbestimmung $K_i$ auf.

Der Messkopf besitzt eine vollständige Erfassungselektronik und liefert für jeden Winkel eine vollständige inkrementelle Winkelinformation, in der vorliegenden Annahme z.B. als periodisches Signalpaar Sinus und Cosinus und ein in Bezug auf die Maßverkörperung absolutes Referenzlagesignal einmal pro Umdrehung, im weiteren auch REF genannt.

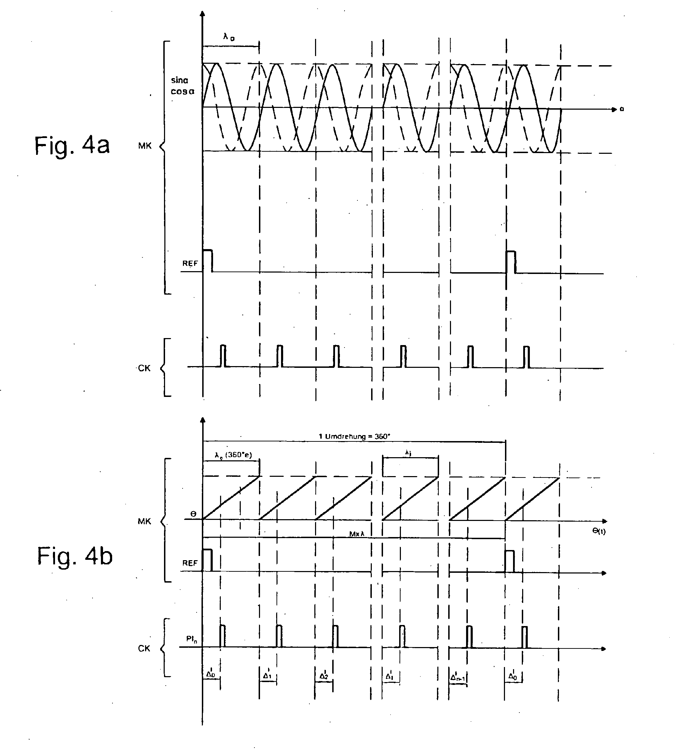

Der Kalibrierkopf CK mit vereinfachter Elektronik liefert nur ein einziges kurzes Signal PI pro Periode der Maßverkörperung im vorliegenden Fall dort, wo der elektrische Winkel "$\alpha$" innerhalb einer Periode den Nullwert annimmt (Fig. 3a und Fig. 4).

Während des Kalibriervorganges wird in der ersten Phase der Kalibrierkopf CK diametral zum Messkopf MK in die Position "2" für die Abtastung der Teilscheibe montiert, an die AE angeschlossen und der Konfigurationsschalter $K_i$ wird auf Stellung "2" entsprechend betätigt.

Bei der relativen Drehung der Teilscheibe beginnt der Kalibriervorgang, wenn die Referenzmarkierung auf der Teilscheibe das Referenzsignal REF im Messkopf MK auslöst. Die analogen Messsignale vom Messkopf MK werden innerhalb jeder Messperiode in einem elektrischen Absolut-Winkelwert "$\theta$" nach einem beliebigen Auswerteverfahren (wie z.B. arcustangens, tracking) umgewandelt. Diese Winkelwerte "$\theta$" werden einerseits zu einem Differenzblock $\Delta$ für die Erfassung der relativen Winkelabweichungen zum Kalibrierkopf CK geleitet und andererseits zum Summierblock $\Sigma$ geführt, wo die berechneten Absolutwinkelkorrekturen dem dazu geordneten laufenden "$\theta_i$" Winkel zugeführt werden. Der korrigierte Winkelwert "$\theta_c$" wird weiter entweder einem sinus/cosinus Digital-Analogwandler für die Analogausgabeschnittstelle oder zu einem Umkodierungsblock für die Rechteck TTL bekannte Encoderformatausgabe (A, B, Ref) weitergeleitet.

Unter diesen Bedingungen ergibt sich unter der Annahme, dass die beiden Abtastköpfe genau diametral in Phase montiert sind, für die erste Periode nach dem Referenzpuls:

$$\theta_{10} = \theta_0 + e_0 + \varepsilon_{10}$$

$$\theta_{20} = \theta_0 - e_0 + \varepsilon_{20}$$

$$\Delta'_0 = \theta_{10} - \theta_{20} = 2e_0 + \varepsilon_{10} - \varepsilon_{20}$$

$$\theta_{co} = \theta_{10} - (\Delta'_0)/2 = \theta_0 + (\varepsilon_{10} + \varepsilon_{20})/2$$

wobei:

$\theta_{ji}$ -    j = Messkopfposition (1, 2, 3 oder 4 in Fig. 3)
        i = Periodenordnung
$\theta_{ci}$ -    Ausgangswinkel
$e_i$ -    Exzentrizität in der Messkopfachse
$\varepsilon_{ji}$ -    Summe der systematischen Fehler
$\theta_i$ -    Idealwinkel

darstellen, und allgemein für jede weitere Periode:

$$\theta_{1i} = \theta_i + e_i + \varepsilon_{1i}$$

$$\theta_{2i} = \theta_i - e_i + \varepsilon_{2i}$$

$$\Delta'_i = \theta_{1i} - \theta_{2i} = 2e_i + \varepsilon_{1i} - \varepsilon_{2i}$$

$$\theta_{ci} = \theta_i + (\varepsilon_{10} + \varepsilon_{20})/2$$

Es ist offensichtlich, dass der korrigierte Ausgangswinkel $\theta_{ci}$ nicht mehr von der Exzentrizität der Teilscheibe "e" beeinflusst wird und dass alle anderen systematischen Fehler, deren Vorzeichen in der Summe nicht von Bedeutung ist, auf einen Mittelwert reduziert werden.

Um eine noch höhere Genauigkeit zu erreichen, kann das Kalibrierverfahren jeweils paarweise diametral extrapoliert werden, wie z.B. für eine zusätzliche Position "3" und "4" wie in Fig. 2 und Fig. 3, oder noch weiter, theoretisch unbegrenzt, für versetzte Positionen wiederholt werden, bis die Genauigkeitsabwicklung praktisch zu einem für eine Umdrehung gleichbleibenden geringen Restrauschen reduziert wird.

Allen Perioden zugeordneten Korrekturwerte $\Delta'_i$ werden in einem nichtflüchtigen Speicher M der Auswerteelektronik AE, dargestellt in Fig. 3 während des Kalibrierverfahrens gespeichert:

Die Zuordnung der einzelnen Korrekturwerte zu den jeweiligen Kalibrierkopfpositionen und Referenzwinkeln erfolgt durch das Steuerelement R (Fig.3) mit den von außen eingegebenen Information $K_i$ über die jeweiligen Kalibrierpositionen.

Für den weiteren Betrieb des Winkelmesssystems, wie in Fig. 2c und Fig. 3b dargestellt, wird nur ein Messkopf benötigt, wobei die ausgegebene Winkelinformation bereits korrigiert ist, ähnlich wie in der Anwesenheit mehrerer Abtastköpfe, deren Messinformationen zur Fehlerkorrektur herangezogen werden.

Durch die Tatsache, dass nur während des Kalibriervorganges mehrere Abtasteinheiten verwendet werden und im Betrieb nur eine einzige aktiv bleibt, stellt sich das Problem der Phasenvariation zwischen den einzelnen Abtasteinheiten von vornherein nicht.

Eine Phasendifferenz bei mehreren Abtasteinheiten kann durch Erschütterungen, falsche punktuelle Positionserfassung oder durch Teilungskontamination verursacht werden und ist die Hauptproblematik einer Messeinrichtung gemäß dem Stand der Technik mit multipler Abtastung.

Für die Einfachheit der Darstellung wurde bisher nur eine Messeinrichtung mit periodischer inkrementeller Teilung der Maßverkörperung vorgestellt.

Bei Messeinrichtungen, die auf der Basis einer Absolutpositionsbestimmung arbeiten, ist das erfindungsgemäße Messsystem selbstverständlich ebenso gut einsetzbar. Dabei wird die Differenz der zwei Messwerte der diametral zueinander gegenüber der Teilung angebrachten Abtastköpfe, also Messkopf und Kalibrierkopf, während des Kalibrierverfahrens erfasst, ohne dass ein Referenzsignal REF notwendig ist.

Die Variation dieser Differenz, bezogen auf die Winkellage zur Maßverkörperung, ist ein Maß der systematischen Fehler der Messeinrichtung und kann, wenn gespeichert, nachher im Betrieb, wie bereits erläutert, für die Winkelkorrekturausgabe herangezogen werden. Im folgenden Betrieb reicht ein einziger Messkopf aus, da die Messwertkorrektur für die Winkelerfassung ausschließlich mit den gespeicherten Korrekturdaten erfolgt.

Eine Kombination zwischen inkrementeller und absoluter Positionserfassung ist auch nach dem beschriebenen Prinzip realisierbar.

Das erfindungsgemäße Kalibrierverfahren, kann z.B. auch für die Eichung einer Drehachse für genaue computer-gesteuerte Anlagen, auch CNC (Computerized numerical control) genannt, verwendet werden.

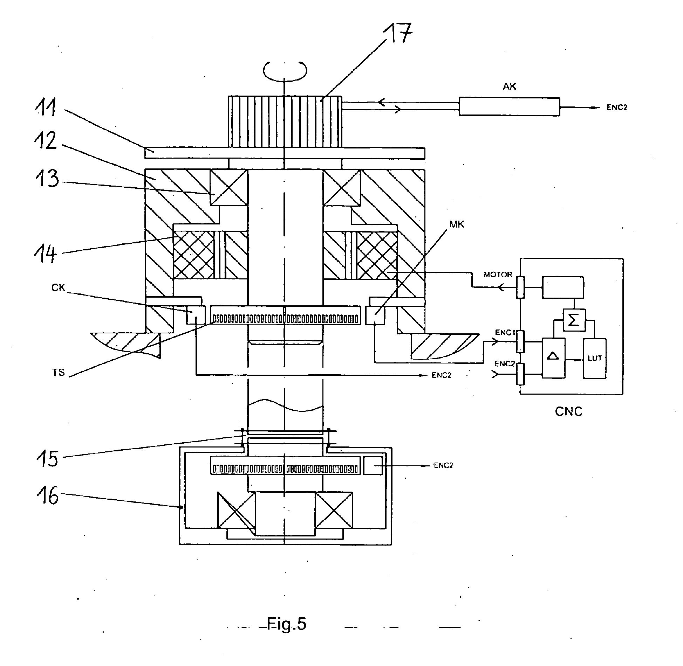

Es wird als Beispiel ein Rundtisch einer CNC-Werkzeugmaschine herangezogen, wie in Fig. 5 dargestellt, wobei 11 eine Drehplatte, 12 den Rundtischkörper, 13 das Lager und 14 den Motor bezeichnet.

Die Winkelposition des Tisches wird in geschlossenen Regelschleifen von dem CNC-Gerät bestimmt, wobei die Motorlage als Feedback-Information vom Winkelmessgerät bestimmt wird.

Das Winkelmessgerät besteht aus einer Teilscheibe TS, die mit dem Drehteil verbunden ist, und einem Messkopf MK, der am Statorteil montiert und über einen sogenannten Encodereingang ENC1 an einem Controller angeschlossen ist.

Im Stand der Technik ist es allgemein bekannt, für hochgenaue Anwendungen, um die systematischen Fehler der Drehachse, wie Rundlauf des Lagers, Exzentrizität der Teilscheibe, lokale Teilungsfehler usw., zu kompensieren, nach der gesamten Anlagenmontage ein zweites in sich vollständiges Winkelmessgerät redundant zum ersten anzubauen, um die Anlage zu eichen.

Die Messinformationen der beiden Winkelmessgeräte werden miteinander verglichen, die Abweichungen ermittelt und als Korrektur für den weiteren Betrieb in der CNC gespeichert. Nach dieser Prozedur wird das zweite Winkelmessgerät wieder abgebaut.

Als solches "Referenzgerät" kann z.B. ein Laserautokolimator AK mit Messpoligon 17 (Fig. 4) oder ein zweites Winkelmessgerät 16, gespannt über eine Kupplung 15 an der Drehachse verwendet werden. Deren ausgegebene Winkelinformation kann entweder direkt über einen zweiten Encodereingang ENC2 der CNC zugeführt werden, um entsprechend automatisch über geeignete Rechenalgorithmen die Korrektur zu erfassen und zu speichern, oder z.B. über eine Positionsanzeige abgelesen und danach als Fehlerkompensation manuell in die CNC eingegeben werden.

Dieses Kalibrierverfahren ist jedoch sehr aufwendig und die damit gewonnenen Korrekturwerte sind beeinflusst von den Abweichungen der Montage des Referenzmesssystems oder bekanntermaßen durch Übertragungsfehler einer eingesetzten Kupplung. Nach der erfindungsgemäßen, vorher beschriebenen Kalibriermethode würde in dieser Messanordnung nur die vorübergehende Montage eines zweiten Kalibrierkopfes CK (Fig.4) für die diametrale Abtastung derselben Teilscheibe TS ausreichen. Allgemein formuliert bedeutet dies, dass bei der Erfindung lediglich ein zusätzlicher, vorübergehend montierter Abtastkopf nötig ist, der jedoch dieselbe Maßverkörperung abtastet wie der Messkopf, wobei der Messkopf und die Maßverkörperung ständig eingebaut bleiben und für die Messwerte während des Betriebs sorgen.

Die Winkelinformation dieses Kalibrierkopfes kann dem Eingang ENC2 der CNC zugeführt werden, wo über eine äquivalente, wie in der zuvor beschriebenen Auswerteelektronik AE verwendete Signalverarbeitung eine Kalibrierung der Achse vorgenommen wird.

Auch in dieser Messanordnung kann der Kalibrierkopf paarweise diametral für eine noch höhere Fehlerunterdrückung auch für zusätzliche Positionen ausgewertet werden.

Nach dem Abschluss des Kalibriervorganges kann der Kalibrierkopf abgebaut werden, da die Korrekturwerte bereits in der CNC gespeichert wurden und im weiteren Betrieb der Achse berücksichtigt werden.

Im folgenden wird beschrieben, dass eine erfindungsgemäße Positionsbestimmung nicht nur zur Bestimmung von Winkeln, sondern auch in linearen Messsystemen zur Bestimmung von Distanzen verwendet werden kann. In ähnlicher Weise kann daher auch eine Linearachse einer Anlage, eines Werkzeuges, eines Hochpräzisionsmessgerätes usw. in erfindungsgemäßer Weise ausgebildet und kalibriert werden. Auch in diesem Fall macht man sich für die Unterdrückung der zunutze, dass die Messfehler im wesentlichen auf systematischen und reproduzierbaren Fehlerquellen beruhen, zu denen geometrische lokale Maschinenfehler oder lokale Teilungsfehler der Maßverkörperung, Abweichungen durch Stöße, Vibrationen und dgl.

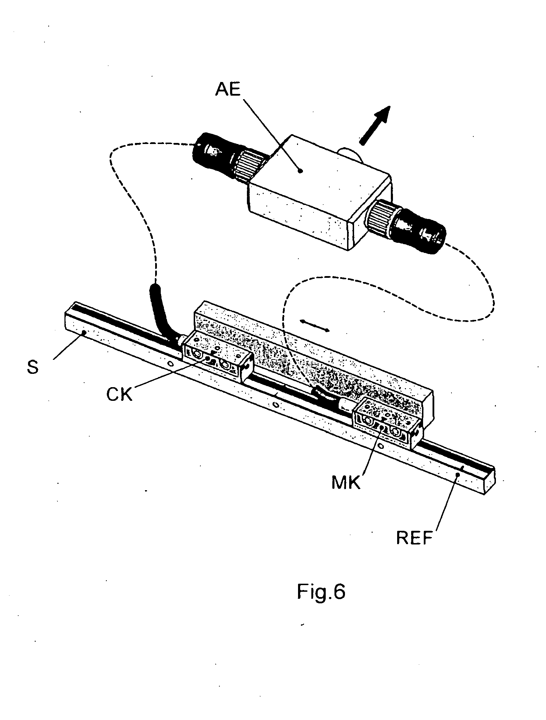

Eine derartige lineare Anwendung ist in Fig. 6 dargestellt. In diesem Fall wird während des Kalibriervorgangs zusätzlich zum Messkopf MK ein Kalibrierkopf CK hinzugefügt und ebenfalls an den Maschinenschlitten angebracht. Messkopf und Kalibrierkopf sind mit demselben Körper verbunden und ändern während des Kalibriervorganges ihre relative Lage zueinander nicht. Sie lesen beide dieselbe Maßverkörperung, jedoch an unterschiedlichen Positionen aus.

Nachdem die gesamte Messlänge durchgemessen wurde, werden die Differenzen in den Positionen bzw. Distanzen, die von den beiden Abtastköpfen gemessen wurden, ermittelt und in Form von Korrekturwerten gespeichert. Im Betrieb nach dem Abbau des Kalibrierkopfes CK wird jede vom Messkopf MK gelieferte Lageinformation mit den vorher erfassten Korrekturwerten bzw. Abweichungen korrigiert. Der Kalibrierkopf CK kann weiter für die Kalibrierung anderer Linearachsen verwendet werden.

**Patentansprüche**

1. Positionsmesseinrichtung zur Erfassung der relativen Lage zweier gegeneinander bewegbarer Körper, umfassend eine mit einem der Körper verbundene Maßverkörperung, die eine Teilung aufweist, und einen mit dem anderen Körper verbundenen Abtastkopf (MK) zum Ablesen der Teilung, wobei der Abtastkopf (MK) mit einer Auswerteelektronik (AE) verbunden ist, **dadurch gekennzeichnet, dass** die Auswerteelektronik (AE) einen nichtflüchtigen Speicher aufweist, in dem Korrekturwerte für die vom Abtastkopf aufgenommenen Messwerte gespeichert sind, wobei die Korrekturwerte bei einer Kalibrierung der Positionsmesseinrichtung aus den Messwerten des Abtastkopfes (MK) und aus den Messwerten mindestens eines weiteren, vorübergehend angebrachten Abtastkopfes (CK), der dieselbe Maßverkörperung ausliest, ermittelt wurden.

2. Verfahren zur Erfassung der relativen Lage zweier gegeneinander bewegbarer Körper, bei dem eine mit einem der Körper verbundene Maßverkörperung mit einem mit dem anderen Körper verbundenen Abtastkopf (MK) abgelesen wird, **dadurch gekennzeichnet, dass** die vom Abtastkopf (MK) aufgenommenen Messwerte mit gespeicherten Korrekturwerten korrigiert werden, die zuvor bei einer Kalibrierung aus den Messwerten des Abtastkopfes (MK) und aus den Messwerten mindestens eines weiteren, vorübergehend angebrachten Abtastkopfes (CK), der dieselbe Maßverkörperung ausliest, ermittelt werden.

3. Verfahren zur Kalibrierung einer Positionsmesseinrichtung zur Erfassung der relativen Lage zweier gegeneinander bewegbarer Körper, wobei die Positionsmesseinrichtung eine mit einem der Körper verbundene Maßverkörperung, die eine Teilung aufweist, und einen mit dem anderen Körper verbundenen Abtastkopf (MK) zum Ablesen der Teilung umfasst und der Abtastkopf (MK) mit einer Auswerteelektronik (AE) verbunden ist, wobei mindestens ein weiterer Abtastkopf (CK) zum Ablesen derselben Maßverkörperung zur Positionsmesseinrichtung hinzugefügt wird und mit den Abtastköpfen (MK, CK) Messwerte ermittelt werden und aus den Abweichungen der von den einzelnen Abtastköpfen (MK, CK) aufgenommenen Messwerte voneinander Korrekturwerte ermittelt werden, die in einem nichtflüchtigen Speicher der Auswerteelektronik (AE) gespeichert werden, und der weitere Abtastkopf (CK) danach von der Positionsmesseinrichtung wieder entfernt wird.

**Claims**

1. Position-measuring device for detecting the relative position of two mutually movable bodies, comprising a material measure which is connected to one of the bodies and has a graduation, and a scanning head (MK), connected to the other body, for reading off the graduation, the scanning head (MK) being connected to an evaluation electronics (AE), **characterized in that** the evaluation electronics (AE) has a non-volatile memory in which correction values for the measured values picked up by the scanning head are stored, the correction values having been determined during a calibration of the position-measuring device from the measured values of the scanning head (MK) and from the measured values of at least one further, temporarily fitted scanning head (CK), which reads out the same material measure.

2. Method for determining the relative position of two mutually movable bodies, in which a material measure connected to one of the bodies is read by a scanning head (MK) connected to the other body, **characterized in that** the measured values picked up by a scanning head (MK) are corrected with stored correction values which are determined in advance during a calibration from the measured values of the scanning head (MK) and from the measured values of at least one further, temporarily fitted scanning head (CK), which reads out the same material measure.

3. Method for calibration a position-measuring device for detecting the relative position of two mutually movable bodies, the position-measuring device comprising a material measure which is connected to one of the bodies and has a graduation, and a scanning head (MK), connected to the other body, for reading off the graduation, and the scanning head (MK) being connected to an evaluation electronics (AE), at least one further scanning head (CK) for reading off the same material measure being added to the position-measuring device, and the scanning heads (MK, CK) being used to determined measured values and there being determined from the mutual deviations of the measured values picked up by the individual scanning heads (MK, CK) correction values which are stored in a non-volatile memory of the evaluation electronics (AE), and the further scanning head (CK) thereafter being removed again from the position-measuring device.

**EP 1 923 670 B1**

**Revendications**

1. Dispositif de mesure de position pour détecter la position relative de deux corps mobiles l'un par rapport à l'autre, comprenant une mesure matérialisée reliée à l'un des corps et présentant une graduation, et comprenant une tête de balayage (MK) reliée à l'autre corps et destinée à lire la graduation, sachant que la tête de balayage (MK) est reliée à une unité électronique d'évaluation (AE), **caractérisé en ce que** l'unité électronique d'évaluation (AE) présente une mémoire non volatile dans laquelle sont mémorisées des valeurs de correction pour les valeurs de mesure enregistrées par la tête de balayage, sachant que les valeurs de correction ont été déterminées lors d'un étalonnage du dispositif de mesure de position à partir des valeurs de mesure de la tête de balayage (MK) et à partir des valeurs de mesure d'au moins une tête de balayage supplémentaire (CK) provisoirement installée, lisant la même mesure matérialisée.

2. Procédé pour détecter la position relative de deux corps mobiles l'un par rapport à l'autre, selon lequel une mesure matérialisée reliée à l'un des corps est lue par une tête de balayage (MK) reliée à l'autre corps, **caractérisé en ce que** les valeurs de mesure enregistrées par la tête de balayage (MK) sont corrigées par des valeurs de correction mémorisées, qui ont été préalablement déterminées lors d'un étalonnage à partir des valeurs de mesure de la tête de balayage (MK) et à partir des valeurs de mesure d'au moins une tête de balayage supplémentaire (CK) provisoirement installée, lisant la même mesure matérialisée.

3. Procédé d'étalonnage d'un dispositif de mesure de position destiné à détecter la position relative de deux corps mobiles l'un par rapport à l'autre, sachant que le dispositif de mesure de position comprend une mesure matérialisée reliée à l'un des corps et présentant une graduation, et une tête de balayage (MK) reliée à l'autre corps et destinée à lire la graduation, et que la tête de balayage (MK) est reliée à une unité électronique d'évaluation (AE), sachant qu'au moins une tête de balayage supplémentaire (CK) est ajoutée pour lire la même mesure matérialisée destinée au dispositif de mesure de position, que des valeurs de mesure sont déterminées avec les têtes de balayage (MK, CK) et que des valeurs de position sont déterminées à partir des écarts entre les valeurs de mesure enregistrées par les têtes de balayage respectives (MK, CK) et sont mémorisées dans une mémoire non volatile de l'unité électronique d'évaluation (AE), et que la tête de balayage supplémentaire (CK) est ensuite retirée du dispositif de mesure de position.

Fig.1

AE

MK

CK

TS

REF

Fig. 2a

AE

CK 4

MK 1

CK 2

CK 3

TS

Fig. 2b

AE

MK

TS

REF

Fig. 2c

Fig. 3a

Fig. 3b

Fig. 4a

Fig. 4b

Fig.5

AE

S

CK

MK

REF

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1811961
- EP 0302194 B1
- DE 19920596 C2
- EP 0395936 A